# EUROPÄISCHE PATENTSCHRIFT

(11) **EP 2 500 197 B1**
(45) Veröffentlichungstag und Bekanntmachung des Hinweises auf die Patenterteilung: **14.02.2018**
(21) Anmeldenummer: 11009933.0
(22) Anmeldetag: 17.12.2011
(51) Int. Cl.: B60K 6/12, B60W 20/00, B60K 6/485, B60W 30/188, B60K 6/48, B60K 25/02, B60W 10/06, B60W 10/08, B60W 10/18, B60W 30/18, B60K 25/00

(54) **Über Nebentrieb verbundener Hybridantrieb**
Hybrid drive connected through auxiliary drive
Entraînement hybride relié par engrenage auxiliaire

(30) Priorität: 12.03.2011 DE 102011013746
(43) Veröffentlichungstag der Anmeldung: 19.09.2012
(73) Patentinhaber: MAN Truck & Bus AG, 80995 München (DE)
(72) Erfinder: Holzmann, Stefan, 85777 Weng (DE); Welfers, Hans Josef, Dr., 85221 Dachau (DE); Kreutmair, Josef, 85276 Pfaffenhofen an der Ilm (DE); Döbereiner, Rolf, Dr., 86153 Augsburg (DE)
(74) Vertreter: v. Bezold & Partner Patentanwälte - PartG mbB

(56) Entgegenhaltungen:
- EP-A1- 2 179 904
- US-A1- 2009 107 739
- US-A1- 2009 255 741
- US-A1- 2010 219 007

## Beschreibung

Die Erfindung betrifft einen Hybridantrieb für Fahrzeuge, insbesondere einen Hybridantrieb, bei dem ein Nebentrieb einer zur primären Energieversorgung vorgesehenen Primäreinrichtung verbindbar ist mit einer zur sekundären Energieversorgung vorgesehenen Sekundäreinrichtung.

Aus der US 2009/0255741 A1 ist ein riemengetriebenes Generatoranlassersystem (BAS-System) für ein Hybridfahrzeug bekannt, das eine erste Riemenscheibe, einen ersten Riemen, eine Motorgeneratoreinheit (MGU), eine zweite Riemenscheibe, einen zweiten Riemen und eine erste Kupplung umfassen kann. Der erste Riemen umgibt die erste Riemenscheibe und eine Kurbelwellenriemenscheibe einer Brennkraftmaschine. Die MGU umfasst die zweite Riemenscheibe und funktioniert als Elektromotor, wenn die Maschine gestartet wird, und als Generator zum Aufladen einer Batterie, wenn die Maschine läuft. Der zweite Riemen umgibt die zweite Riemenscheibe und mindestens eine Antriebsriemenscheibe einer Zubehöreinheit. Die erste Kupplung koppelt/entkoppelt die Kurbelwellenriemenscheibe mit/von der zweiten Riemenscheibe in Abhängigkeit von einem Betrieb der Maschine. Zum Stand der Technik kann ferner auf die US 2010/219007 A1 verwiesen werden.

Im Stand der Technik ist der hydraulische Hybridantrieb als effizientes System zur Bremsemergie-Rekuperation bekannt. Dabei ist es üblich, eine als Pumpe und/oder Motor betreibbare hydraulische Einheit über eine Getriebestufe mit der Gelenkwelle am Getriebeausgang zu verbinden. Im Bremsfall wird die hydraulische Einheit als Hydraulikpumpe betrieben, wodurch Druck in einem Hydraulikspeicher erzeugt wird. Dieser Druck kann für die folgende Fahrzeugbeschleunigung genutzt werden. Im Beschleunigungsfall wird die hydraulische Einheit als Motor betrieben, um zusätzliches Drehmoment in den Antriebsstrang des Fahrzeugs einzuspeisen und somit den Verbrennungsmotor zu entlasten, was mitunter auch als "boosten" bekannt ist. Durch diese Bremsenergie-Rekuperation kann Kraftstoff gespart werden.

Eine Aufgabe der Erfindung ist es, einen verbesserten Hybridantrieb zu schaffen. Insbesondere ist es eine Aufgabe der Erfindung, einen bei vergleichbarem Leistungsdurchsatz kostengünstigeren Hybridantrieb zu schaffen.

Die Aufgabe wird erfindungsgemäß mit den Merkmalen des unabhängigen Anspruchs gelöst.

Gemäß der Erfindung wird ein Hybridantrieb für ein Fahrzeug, insbesondere ein Nutzfahrzeug bereitgestellt. Das Nutzfahrzeug ist vorzugsweise ein Omnibus oder ein Lastkraftwagen oder dergleichen und kann optional mit Energie zu versorgende An- und/oder Aufbauten aufweisen (z.B. Müllpresse eines Müllsammelfahrzeugs, Arbeitsmaschinen, etc..).

Der Hybridantrieb umfasst eine Primäreinrichtung, die zur primären Energieversorgung vorgesehen ist und die einen Haupttrieb und zumindest einen Nebentrieb aufweist. Die primäre Energieversorgung kann z.B. genutzt werden, um das Fahrzeug anzutreiben und/oder um eine oder mehrere (der weiter unten näher erörterten) Fahrzeugkomponenten mit Energie zu versorgen.

Ferner umfasst der Hybridantrieb eine Sekundäreinrichtung, die zur vorzugsweise sekundären, weiteren Energieversorgung vorgesehen ist und zur Umwandlung von Energie, wie z.B. kinetischer Energie, Bremsenergie, Schubenergie oder anderweitiger Überschussenergie. Ferner ist die Sekundäreinrichtung vorzugsweise vorgesehen zur Rekuperation und/oder zur (z.B. elektrischen oder hydraulischen) Speicherung von Energie. Die sekundäre Energieversorgung kann z.B. genutzt werden, um das Fahrzeug (z.B. primäreinrichtungsenergiefrei oder zusammen mit Energie von der Primäreinrichtung) anzutreiben und/oder um eine oder mehrere (der weiter unten näher erörterten) Fahrzeugkomponenten mit Energie zu versorgen. Besonders vorteilhaft kann die sekundäre Energieversorgung genutzt werden, um die Primäreinrichtung beim Beschleunigen des Fahrzeugs zu entlasten.

Die Sekundäreinrichtung ist mit dem zumindest einen Nebentrieb verbunden, um der Sekundäreinrichtung Energie über den zumindest einen Nebentrieb bereitzustellen und/oder um z.B. dem Antriebsstrang des Fahrzeugs Energie aus der Sekundäreinrichtung über den zumindest einen Nebentrieb bereitzustellen.

Es ist möglich, dass die Sekundäreinrichtung an den zumindest einen Nebentrieb angeschlossen ist.

Die der Sekundäreinrichtung über den Nebentrieb bereitgestellte Energie ist vorzugsweise umzuwandelnde und/oder zu rekuperierende Energie.

Die aus der Sekundäreinrichtung über den Nebentrieb bereitgestellte Energie ist insbesondere umgewandelte und/oder rekuperierte Energie, die vorzugsweise zuvor in der Sekundäreinrichtung gespeichert war.

Vorzugsweise umfasst der Antriebsstrang des Fahrzeugs den Haupttrieb und ferner insbesondere eine mit dem Haupttrieb verbindbare Antriebsstrangwelle und optional die weiteren üblichen Antriebselemente zwischen Haupttrieb und Räder. Es ist auch möglich, dass der Antriebsstrang die Primäreinrichtung umfasst.

Die Erfindung nutzt vorteilhaft den an der Primäreinrichtung vorhandenen Nebentrieb als Anschluss für die Sekundäreinrichtung. Über diesen Nebentrieb kann Energie transferiert werden zur rekuperativen Umwandlung und Speicherung in der Sekundäreinrichtung. Bei Bedarf kann die rekuperierte, umgewandelte und gespeicherte Energie genutzt werden, z.B. zur Energieversorgung von Fahrzeugkomponenten, z.B. Nebenverbrauchern, und/oder um Drehmoment in den Antriebsstrang des Fahrzeugs einzuspeisen.

Besonders vorteilhaft ist, dass eine zusätzliche Getriebestufe nicht erforderlich ist.

Die Sekundäreinrichtung kann ferner vorteilhaft auf einem höheren Drehzahlniveau bei geringerem Drehmoment (bzw. Druck) laufen und insbesondere bei gegenüber bekannten Systemen vergleichbarem Leistungsdurchsatz kostengünstiger ausgelegt werden.

Weiter vorteilhaft ist die deutliche Kraftstoffeinsparung, die mittels der Sekundäreinrichtung erzielt werden kann.

Der Nebentrieb ist als Nebenabtrieb bzw. Nebenantrieb ausgebildet und ist vorzugsweise eine Nockenwelle. Insbesondere kann der Nebentrieb ein sogenannter PTO (power take-off) sein, z.B. ein Nockenwellen-PTO.

Der Haupttrieb ist als Hauptabtrieb bzw. Hauptantrieb ausgebildet und ist vorzugsweise eine Kurbelwelle.

Die Sekundäreinrichtung ist vorzugsweise mit dem zumindest einen Nebentrieb verbunden, um der Sekundäreinrichtung umzuwandelnde, vom Antriebsstrang des Fahrzeugs transferierte Energie über den zumindest einen Nebentrieb und/oder über den Haupttrieb bereitzustellen.

Die Sekundäreinrichtung kann ausgebildet und betreibbar sein als Hydraulikeinheit, die vorzugsweise eine Hydraulikpumpe und/oder einen Hydraulikmotor umfasst. Die Hydraulikpumpe und der Hydraulikmotor können beispielsweise voneinander getrennte Komponenten darstellen oder in Form einer Pumpen/Motor-Einheit ausgebildet sein.

Die Sekundäreinrichtung kann ausgebildet und betreibbar sein als Elektroeinheit, die vorzugsweise einen Generator und/oder einen Elektromotor umfasst.

Die Primäreinrichtung ist vorzugsweise eine Brennkraftmaschine, insbesondere ein Dieselmotor und/oder umfasst zumindest eine Brennkraftmaschine.

Es ist möglich, dass die Sekundäreinrichtung hydraulisch betrieben wird, um umzuwandelnde Energie in hydraulische Energie umzuwandeln, und hydromotorisch betrieben wird, um die umgewandelte Energie einer Fahrzeugkomponente und/oder dem Antriebsstrang des Fahrzeugs bereitzustellen. Alternativ oder ergänzend ist es möglich, dass die Sekundäreinrichtung generatorisch betrieben wird, um umzuwandelnde Energie in elektrische Energie umzuwandeln, und elektromotorisch betrieben wird, um die umgewandelte Energie einer Fahrzeugkomponente und/oder dem Antriebsstrang des Fahrzeugs bereitzustellen.

Es ist möglich, dass die Sekundäreinrichtung zumindest einen Energiespeicher umfasst, in dem die umgewandelte bzw. umzuwandelnde Energie speicherbar ist. Der zumindest eine Energiespeicher kann mechanischer, hydraulischer (z.B. Druckspeicher, Hochdruckspeicher und/oder Niederdruckspeicher) und/oder elektrischer (z.B. eine oder mehrere Batterien oder Superkondensatoren) Art sein.

Vorzugsweise umfasst die Hydraulikeinheit einen hydraulischen Speicher zur Speicherung hydraulischer Energie, während die Elektroeinheit vorzugsweise einen elektrischen Speicher zur Speicherung elektrischer Energie umfasst.

Die umgewandelte, gespeicherte Energie kann einer oder mehreren Fahrzeugkomponenten bereitgestellt werden.

Insbesondere kann die umgewandelte Energie über den Nebentrieb transferiert und genutzt werden, um ein zusätzliches Drehmoment in den Antriebsstrang des Fahrzeugs einzuspeisen, vorzugsweise, wenn das Fahrzeug beschleunigt wird.

Es ist möglich, dass der Hybridantrieb so ausgebildet ist, dass Energie aus der Sekundäreinrichtung genutzt wird, um den Antriebsstrang im Wesentlichen primäreinrichtungsenergiefrei anzutreiben. Mit anderen Worten kann der Hybridantrieb so ausgebildet sein, dass der Antriebsstrang allein von der Sekundäreinrichtung ohne zusätzliche Energie von der Primäreinrichtung angetrieben wird. Es ist auch möglich, dass der Hybridantrieb so ausgebildet ist, dass Energie aus der Sekundäreinrichtung genutzt wird, um den Antriebsstrang zusammen mit Primäreinrichtungsenergie anzutreiben, wodurch die Primäreinrichtung entlastet werden kann, vorzugsweise, wenn das Fahrzeug beschleunigt wird.

Es ist auch möglich, dass die Sekundäreinrichtung vorgesehen ist, um die Primäreinrichtung zu starten. Insbesondere ist eine Start/Stopp-Funktion für die Primäreinrichtung erzielbar, da z.B. bei geöffneter Kupplung wie etwa während eines Schaltvorgangs oder beim Anfahren die Primäreinrichtung mittels der Sekundäreinrichtung gestartet werden kann. Vorteilhaft kann dadurch das elektrische Bordnetz entlastet werden. Ferner wird vorteilhaft die Lebensdauer der Starterbatterien und der Starter durch eine solche Start/Stopp-Funktion nicht nachteilig beeinflusst.

Die Fahrzeugkomponente kann den Antriebsstrang des Fahrzeugs umfassen. Es ist auch möglich, dass die Fahrzeugkomponente einen oder mehrere Nebenverbraucher (z.B. eine Müllpresse oder andere Fahrzeugan- oder -aufbauten), Arbeitsmaschinen und/oder eine oder mehrere von folgenden vorzugsweise elektrischen Einrichtungen umfasst: Lenkhelfpumpe, Klimaanlagenkomponente (z.B. Klimakompressor), Luftpresser, Fahrzeug-Bordnetzversorung, Einrichtung zum Starten der Brennkraftmaschine (z.B. Starter, Starterbatterien, etc.), etc..

Der Nebentrieb kann mit der Sekundäreinrichtung über eine vorzugsweise schaltbare Kupplung trennbar verbunden werden. Dadurch wird ermöglicht, dass die Sekundäreinrichtung bei Bedarf vollständig vom Antriebsstrang und/oder dem Nebentrieb getrennt werden kann, insbesondere mit dem erzielbaren Vorteil, dass auch bei wechselndem zeitweisen Betrieb des Fahrzeugs (z.B. auf Landstraßen, Autobahnen, Innenstädten, etc.) keine Verschlechterung des Verbrauchs auftritt.

Es ist möglich, dass zusätzlich zu der Sekundäreinrichtung eine weitere Fahrzeugkomponente, insbesondere ein Nebenverbraucher des Fahrzeugs, mit dem Nebentrieb verbindbar ist, um mit Energie versorgt zu werden. In diesem Fall kann die umgewandelte Energie zur Energieversorgung, insbesondere zum Antrieb der Fahrzeugkomponente genutzt werden (z.B. einer Müllpresse). Für ein Müllsammelfahrzeug z.B. ist es von Vorteil, die umgewandelte Energie nicht dem Antriebsstrang des Fahrzeugs etwa zur Fahrzeugbeschleunigung bereitzustellen, sondern für den Betrieb der Müllpresse zu nutzen.

Es ist möglich, dass die Fahrzeugkomponente an den Nebentrieb angeschlossen ist.

Vorzugsweise ist dem zumindest einen Nebentrieb und/oder dem Haupttrieb ein vorzugsweise schaltbares Getriebe antriebstechnisch nachgeschaltet, wodurch z.B. die Zugkraft und/oder die Steigfähigkeit des Fahrzeugs im Sekundäreinrichtungsbetrieb (Hybridbetrieb) gesteigert werden kann. Das nachgeschaltete Getriebe ermöglicht vorteilhaft, dass die Sekundäreinrichtung in einem relativ engen und hohen Drehzahlband mit optimierten Wirkungsgraden betrieben werden kann und ferner eine kleine Baugröße aufweist und außerdem mit optimierten Herstellkosten ausgebildet werden kann. Ferner können vorteilhaft hohe Wirkungsgrade bis zum Stillstand des Fahrzeugs erzielt werden.

Insbesondere ist das Getriebe dem zumindest einen Nebentrieb und/oder dem Haupttrieb so nachgeschaltet, dass umgewandelte Energie aus der Sekundäreinrichtung über den Nebentrieb, vorzugsweise den Haupttrieb und mittels der Antriebsstrangwelle zu dem vorzugsweise schaltbaren Getriebe gelangt.

Es ist möglich, dass der Haupttrieb mit der Antriebsstrangwelle verbunden ist bzw. an die Antriebsstrangwelle angeschlossen ist, während der Nebentrieb vorzugsweise mit dem Haupttrieb verbunden ist.

Die umzuwandelnde Energie umfasst vorzugsweise Rekuperationsenergie (zu rekuperierende Energie), kinetische Energie, Bremsenergie, Schubenergie, hydraulische Energie, elektrische Energie und/oder anderweitige Überschussenergie.

Die Erfindung umfasst auch ein Fahrzeug, vorzugsweise ein Nutzfahrzeug mit einem Hybridantrieb, wie hierin beschrieben.

Die oben beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren.
- Figur 1: zeigt eine schematische Darstellung eines Hybridantriebs gemäß einer ersten Ausführungsform der Erfindung, und
- Figur 2: zeigt eine schematische Darstellung eines Hybridantriebs gemäß einer zweiten Ausführungsform der Erfindung.

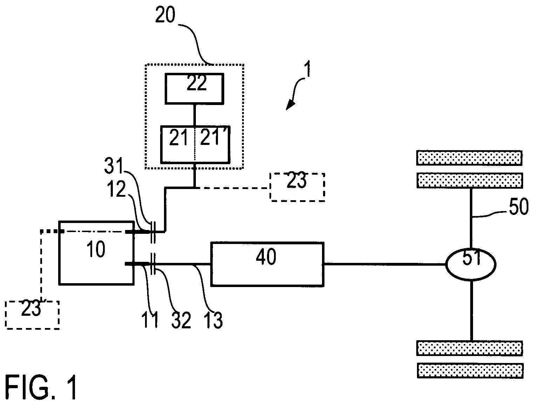

Figur 1 zeigt eine schematische Darstellung eines Hybridantriebs 1 für ein Nutzfahrzeug gemäß einer ersten Ausführungsform der Erfindung. Der Hybridantrieb 1 umfasst eine Primäreinrichtung 10 und eine Sekundäreinrichtung 20.

Die Primäreinrichtung 10 umfasst eine Brennkraftmaschine, die als Dieselmotor ausgebildet ist und die zur primären Energieversorgung des Nutzfahrzeugs dient. Der Dieselmotor 10 umfasst einen als Kurbelwelle ausgebildeten Haupttrieb 11 und zumindest einen als Nockenwelle oder kurbelwellenfesten ausgebildeten Nebentrieb 12.

Die Sekundäreinrichtung 20 ist ausgebildet als Hydraulikeinheit und weist eine Hydraulikpumpe 21 und/oder einen Hydraulikmotor 21' auf.

Die Hydraulikpumpe 21 und der Hydraulikmotor 21' können als getrennte Komponenten oder als Pumpe/Motor-Einheit ausgebildet werden, was an sich beides aus dem Stand der Technik bekannt ist.

Ferner weist die Hydraulikeinheit 20 einen hydraulischen Energiespeicher 22 auf. Der Energiespeicher 22 ist vorzugsweise ein ein Hydraulikfluid aufweisender Druckspeicher. Bei einer anderen Ausführungsform ist es möglich, anstatt des einen Energiespeichers 22 einen Hochdruckspeicher und einen Niederdruckspeicher vorzusehen, was ebenso an sich beides aus dem Stand der Technik bekannt ist.

Die Hydraulikeinheit 20 ist vorgesehen, um Bremsenergie in hydraulische Energie umzuwandeln, zu speichern und bei Bedarf dem Antriebsstrang des Nutzfahrzeugs bereitzustellen. Die Hydraulikeinheit 20 ist als Hydraulikpumpe 21 betreibbar, um umzuwandelnde Bremsenergie in hydraulische Energie umzuwandeln, und als Hydraulikmotor 21' betreibbar, um die in hydraulische Energie umgewandelte Bremsenergie dem Antriebsstrang bereitzustellen. Die Hydraulikeinheit 20 kann auf an sich bekannte Weise aufgebaut und betrieben werden.

Eine Besonderheit besteht jedoch darin, dass die Hydraulikeinheit 20 mit dem Nebentrieb 12 des Dieselmotors 10 trennbar verbunden ist bzw. an den Nebentrieb 12 des Dieselmotors 10 trennbar angeschlossen werden kann. Zwischen Nebentrieb 12 und Hydraulikeinheit 20 ist eine schaltbare Kupplung 31 angeordnet, um die Hydraulikeinheit 20 und den Nebentrieb 12 bei Bedarf voneinander trennen zu können. Die schaltbare Kupplung 31 kann in einer weiteren Ausführungsform der vorliegenden Erfindung beispielsweise Bestandteil einer Schwenkpumpe oder Verstellpumpe oder Axialpumpe sein oder durch eine solcher Pumpen realisiert sein.

Die umzuwandelnde, zu rekuperierende vom Antriebsstrang transferierte Bremsenergie wird über den Nebentrieb 12 an die Hydraulikeinheit 20 bereitgestellt, während umgewandelte, rekuperierte gespeicherte Energie aus der Hydraulikeinheit 20 über den Nebentrieb 12 dem Antriebsstrang bereitgestellt und genutzt wird, um Drehmoment in den Antriebsstrang einzuspeisen.

Wie in Figur 1 zu sehen, umfasst der Antriebsstrang insbesondere den Haupttrieb 11 und ferner vorzugsweise eine mit dem Haupttrieb 11 verbundene Antriebsstrangwelle 13, ein vorzugsweise schaltbares Getriebe 40 und die die Hinterräder aufweisende Hinterradachse 50. Zwischen der Antriebsstrangwelle 13 und dem Haupttrieb 11 ist eine vorzugsweise schaltbare Kupplung 32 angeordnet, um die Antriebsstrangwelle 13 und den Haupttrieb 11 bei Bedarf voneinander trennen zu können.

Die rekuperierte, umgewandelte und im hydraulischen Energiespeicher 22 gespeicherte Energie muss nicht zwangsläufig dem Antriebsstrang bereitgestellt werden, sondern kann ergänzend oder alternativ auch zum Starten des Dieselmotors 10 genutzt werden und ebenso zur Energieversorgung weiterer Fahrzeugkomponenten. Zu diesem Zweck kann eine Fahrzeugkomponente 23 mit der Hydraulikeinheit 20 verbunden werden, was in Figur 1 schematisch durch die Bezugszeichen 23 zugeordnete gestrichelte Linie angedeutet ist.

Es ist möglich, dass der Nebentrieb 12 an seinem einen Ende mit der Hydraulikeinheit 20 verbindbar ist bzw. an die Hydraulikeinheit 20 anschließbar ist und an seinem anderen Enden mit einer Fahrzeugkomponente 23' verbindbar ist bzw. an die Fahrzeugkomponente 23' anschließbar ist, was in Figur 1 durch die Bezugszeichen 23' zugeordnete gestrichelte Linie und den gestrichelten, optionalen Teil des Nebentriebs 11 angedeutet ist.

Es ist auch möglich, dass eine Fahrzeugkomponente über ein geeignetes Getriebe mit dem Nebentrieb 11 verbindbar ist.

Die Fahrzeugkomponente(n) 23, 23' kann einen Nebenverbraucher (z.B. eine Müllpresse oder andere Fahrzeugan- oder -aufbauten), eine Arbeitsmaschine und/oder eine oder mehrere von folgenden vorzugsweise elektrischen Einrichtungen umfassen: Lenkhelfpumpe, Klimaanlagenkomponente (z.B. Klimakompressor), Luftpresser, Fahrzeug-Bordnetzversorung, Einrichtung zum Starten der Brennkraftmaschine (z.B. Starter, Starterbatterien, etc.), etc..

Das Getriebe 40 ist der Hydraulikeinheit 20 und dem Nebentrieb 12 antriebstechnisch nachgeschaltet. Insbesondere gelangt umgewandelte Energie aus der Hydraulikeinheit 20 über den Nebentrieb 12 zu dem Haupttrieb 11 und mittels der Antriebsstrangwelle 13 zu dem Getriebe 40, von wo aus es über ein Differential 51 an die die Hinterräder aufweisende Fahrzeughinterachse 50 gelangt.

Das Getriebe 40 kann als automatisiertes Handschaltgetriebe (Automatic Manual Transmission - AMT) oder als Wandler-Automat (Automatic Transmission - AT) bzw. Automatikgetriebe ausgebildet sein.

Der Hybridantrieb kann über ein Hybridsteuergerät (Hybrid Control Unit - HCU) gesteuert bzw. geregelt und überwacht werden, das mit einem Fahrzeugführungsrechner (FFR), einer Verbrennungsmotorsteuerung (Engine Control Unit - ECU) und einem Getriebesteuergerät (Transmission Control Unit - TCU) vorzugsweise über einen Datenbus kommunizieren kann. Das Hybridsteuergerät überwacht den aktuellen Fahrzustand (z.B. Beschleunigen, Konstantfahrt, Bremsen, Stillstand) und erfasst das im Energiespeicher 22 gespeicherte, nutzbare Energieniveau.

Beim Beschleunigen kann über die Hydraulikeinheit 20 zusätzliches Drehmoment in den Antriebsstrang eingespeist werden. Das Getriebesteuergerät wird derart angesteuert, dass für diesen Fall ein Gang eingelegt wird und der Kraftschluss zur Fahrzeughinterachse 50 gewährleistet wird. Falls ein Wandler-Automat verbaut ist, kann eine Wandler-Überbrückungskupplung angemessen, meist so früh wie möglich, geschlossen werden, um einen optimierten Rekuperationswirkungsgrad zu erzielen. Die Verbrennungsmotorsteuerung kann entsprechend dem Fahrerwunsch das Lastmoment des Dieselmotors 10 unter Berücksichtigung des eingespeisten, zusätzlichen Drehmoments regeln bzw. steuern. Der Fahrzeugführungsrechner kann die Drehmomente des Dieselmotors 10 und der Hydraulikeinheit 20 erfassen und/oder überwachen, z.B. um in ausreichender Genauigkeit die aktuelle Fahrzeugmasse schätzen zu können.

Beim Bremsen kann die Hydraulikeinheit 20 als Pumpe wirken. In Abhängigkeit vom Druckniveau im Energiespeicher 22 ist eine entsprechende Förderleistung von dem Hybridsteuergerät anforderbar. Das Getriebesteuergerät hält den eingelegten Gang, sofern keine sicherheits- und/oder bauteilkritischen Zustände erreicht werden. Der Dieselmotor 10 läuft im Schubbetrieb ohne Kraftstoffeinspritzung , wobei ein Elektrodieselsteuergerät (Electronic Diesel Control - EDC) die Motorbremse derart steuert bzw. regelt, dass optimiert rekupiert werden kann. Je nach Höhe der angeforderten Bremsleistung bzw. Fahrzeuggeschwindigkeit werden vom Fahrzeugführungsrechner oder einem Bremssteuergerät (sofern vorhanden) zusätzlich die mechanischen Fahrzeugbremsen zugeschaltet.

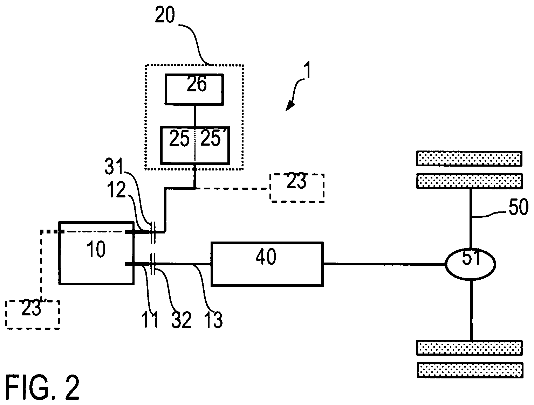

Figur 2 zeigt eine schematische Darstellung eines Hybridantriebs 1 für ein Nutzfahrzeug gemäß einer zweiten Ausführungsform der Erfindung. Die zweite Ausführungsform stimmt teilweise mit der ersten Ausführungsform überein, wobei ähnliche oder identische Teile mit dem gleichen Bezugszeichen versehen sind, und zu deren Erläuterung auch auf die Beschreibung der vorstehend beschriebenen Ausführungsform verwiesen wird, um Wiederholungen zu vermeiden.

Eine Besonderheit der zweiten Ausführungsform ist, dass die Sekundäreinrichtung anstelle der Hydraulikeinheit eine Elektroeinheit umfasst. Wie ein Vergleich der Figuren 1 und 2 zeigt, ist das Funktionsprinzip der elektrischen Ausführung vergleichbar mit dem Funktionsprinzip der hydraulischen Ausführung. Insbesondere umfasst die elektrische Ausführung anstatt der Hydraulikpumpe 21 einen Generator 25, anstatt des Hydraulikmotors 21' einen Elektromotor 25' und anstatt des hydraulischen Energiespeichers 22 einen elektrischen Energiespeicher 26 (z.B. Batterien oder Superkondensatoren). Die Elektroeinheit 20 kann auf an sich bekannte Weise ausgebildet und betrieben werden.

Eine weitere Besonderheit besteht darin, dass die Elektroeinheit 20 mit dem Nebentrieb 12 des Dieselmotors 10 trennbar verbunden ist bzw. an den Nebentrieb 12 des Dieselmotors 10 trennbar angeschlossen werden kann.

In Schub- und/oder Bremsphasen wirkt die Elektroeinheit 20 mittels des Generators 25 generatorisch (anstatt hydraulisch) und lädt den elektrischen Energiespeicher 26 (anstatt des hydraulischen Energiespeichers). Bei Bedarf wirkt die Elektroeinheit 20 mittels des Elektromotors 25' elektromotorisch (anstatt hydromotorisch). Somit kann umzuwandelnde Energie der Elektroeinheit 20 über den Nebentrieb 12 bzw. dem Antriebsstrang umgewandelte Energie aus der Elektroeinheit 20 über den Nebentrieb 12 bereitgestellt werden.

Die vorstehenden bevorzugten Ausführungsformen und/oder deren Einzelmerkmale können beliebig miteinander kombiniert werden. Die Erfindung ist nicht auf die vorstehend beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen

### Bezugszeichenliste

- 1: Hybridantrieb
- 10: Primäreinrichtung
- 11: Haupttrieb
- 12: Nebentrieb
- 13: Antriebsstrangwelle
- 20: Sekundäreinrichtung
- 21: Hydraulikpumpe
- 21': Hydraulikmotor
- 22: Hydraulikenergiespeicher
- 23: Fahrzeugkomponente / Nebenverbraucher
- 23': Fahrzeugkomponente / Nebenverbraucher
- 25: Generator
- 25': Elektromotor
- 26: Elektroenergiespeicher
- 31: Kupplung
- 32: Kupplung
- 40: Getriebe
- 50: Hinterradachse
- 51: Differential

## Patentansprüche

1. Hybridantrieb (1) für ein Fahrzeug, insbesondere Nutzfahrzeug, umfassend:
- eine Primäreinrichtung (10), vorgesehen zur primären Energieversorgung und aufweisend einen Haupttrieb (11) und zumindest einen einen Nockenwellentrieb umfassenden Nebentrieb (12); und
- eine Sekundäreinrichtung (20), vorgesehen zur sekundären Energieversorgung und um Energie umzuwandeln, wobei
- die Sekundäreinrichtung (20) mit dem zumindest einen Nebentrieb (12) verbindbar ist, um der Sekundäreinrichtung (20) umzuwandelnde Energie über den zumindest einen Nebentrieb (12) bereitzustellen und/oder um dem Antriebsstrang des Fahrzeugs umgewandelte Energie aus der Sekundäreinrichtung (20) über den zumindest einen Nebentrieb (12) bereitzustellen.

2. Hybridantrieb (1) nach Anspruch 1, wobei die Sekundäreinrichtung (20) mit dem zumindest einen Nebentrieb (12) verbindbar ist, um der Sekundäreinrichtung (20) umzuwandelnde, vom Antriebsstrang des Fahrzeugs transferierte Energie über den Haupttrieb (11) und/oder den zumindest einen Nebentrieb (12) bereitzustellen.

3. Hybridantrieb (1) nach Anspruch 1 oder 2, wobei
- die Sekundäreinrichtung (20) eine Hydraulikeinheit mit einer Hydraulikpumpe (21) und/oder einem Hydraulikmotor (21') umfasst, oder
- die Sekundäreinrichtung (20) eine Elektroeinheit mit einem Generator (25) und/oder einem Elektromotor (25') umfasst, und/oder
- die Primäreinrichtung (10) eine Brennkraftmaschine umfasst.

4. Hybridantrieb (1) nach einem der vorhergehenden Ansprüche, wobei die Sekundäreinrichtung (20)
- hydraulisch betreibbar ist, um umzuwandelnde Energie in hydraulische Energie umzuwandeln, und hydromotorisch betreibbar ist, um die umgewandelte Energie einer Fahrzeugkomponente und/oder dem Antriebsstrang des Fahrzeugs bereitzustellen, oder
- generatorisch betreibbar ist, um umzuwandelnde Energie in elektrische Energie umzuwandeln, und elektromotorisch betreibbar ist, um die umgewandelte Energie einer Fahrzeugkomponente und/oder dem Antriebsstrang des Fahrzeugs bereitzustellen.

5. Hybridantrieb (1) nach einem der vorhergehenden Ansprüche, wobei die Sekundäreinrichtung (20) zumindest einen Energiespeicher (22; 26) zur Speicherung umgewandelter Energie umfasst.

6. Hybridantrieb (1) nach Anspruch 5, wobei der zumindest eine Energiespeicher (22; 26) mechanischer oder hydraulischer oder elektrischer Art ist.

7. Hybridantrieb (1) nach einem der vorhergehenden Ansprüche, wobei die Sekundäreinrichtung (20) mit dem zumindest einen Nebentrieb (12) über eine Kupplung (31) trennbar verbindbar ist.

8. Hybridantrieb (1) nach einem der vorhergehenden Ansprüche, wobei die Sekundäreinrichtung (20) ausgebildet ist,
- um die Primäreinrichtung (10) zu starten, und/oder
- um die Primäreinrichtung (10) zu unterstützen, wenn das Fahrzeug beschleunigt wird.

9. Hybridantrieb (1) nach einem der vorhergehenden Ansprüche, wobei der zumindest eine Nebentrieb (12) haupttriebsfest, insbesondere kurbelwellenfest, ausgebildet ist.

10. Hybridantrieb (1) nach einem der vorhergehenden Ansprüche, wobei
- der Haupttrieb (11) eine Kurbelwelle umfasst, und/oder
- der Haupttrieb (11) mit einer Antriebsstrangwelle (13) des Fahrzeugs verbindbar ist, und/oder
- der Haupttrieb (11) mit dem zumindest einen Nebentrieb (12) verbindbar ist.

11. Hybridantrieb (1) nach einem der vorhergehenden Ansprüche, wobei
- ein Nebenverbraucher (23) des Fahrzeugs mit der Sekundäreinrichtung (20) verbindbar ist, und/oder
- ein Nebenverbraucher (23') des Fahrzeugs mit dem zumindest einen Nebentrieb (12) verbindbar ist.

12. Hybridantrieb (1) nach einem der vorhergehenden Ansprüche, wobei die umzuwandelnde Energie zumindest eine Form von Folgenden umfasst:
- Rekuperationsenergie,
- kinetische Energie,
- Bremsenergie,
- Schubenergie,
- Überschussenergie.

13. Hybridantrieb (1) nach einem der vorhergehenden Ansprüche, wobei dem Haupttrieb (11) ein Getriebe (40) nachgeschaltet ist.

14. Fahrzeug, insbesondere Nutzfahrzeug, umfassend einen Hybridantrieb (1) nach einem vorhergehenden Ansprüche.

## Claims

1. Hybrid drive (1) for a vehicle, in particular a utility vehicle, comprising:
- a primary device (10), provided for serving as a primary energy supply and having a main drive (11) and at least one secondary drive (12) comprising a camshaft drive; and
- a secondary device (20), provided for serving as a secondary energy supply and for converting energy, wherein
- the secondary device (20) can be connected to the at least one secondary drive (12) in order to provide energy which is to be converted to the secondary device (20) via the at least one secondary drive (12) and/or in order to provide converted energy to the drive train of the vehicle from the secondary drive (20) via the at least one secondary drive (12).

2. Hybrid drive (1) according to Claim 1, wherein the secondary device (20) can be connected to the at least one secondary drive (12) in order to provide energy, which is to be converted and which is transferred from the drive train of the vehicle, to the secondary device (20) via the main drive (11) and/or the at least one secondary drive (12).

3. Hybrid drive (1) according to Claim 1 or 2, wherein
- the secondary device (20) comprises a hydraulic unit with a hydraulic pump (21) and/or a hydraulic motor (21'), or
- the secondary device (20) comprises an electric unit with a generator (25) and/or an electric motor (25'), and/or
- the primary device (10) comprises an internal combustion engine.

4. Hybrid drive (1) according to one of the preceding claims, wherein the secondary device (20)
- can be operated hydraulically in order to convert energy which is to be converted into hydraulic energy, and can be operated as a hydraulic motor in order to provide the converted energy to a vehicle component and/or to the drive train of the vehicle,
or
- can be operated as a generator in order to convert energy which is to be converted into electrical energy, and can be operated as an electric motor in order to provide the converted energy to a vehicle component and/or to the drive train of the vehicle.

5. Hybrid drive (1) according to one of the preceding claims, wherein the secondary device (20) comprises at least one energy store (22; 26) for storing converted energy.

6. Hybrid drive (1) according to Claim 5, wherein the at least one energy store (22; 26) is of a mechanical or hydraulic or electrical type.

7. Hybrid drive (1) according to one of the preceding claims, wherein the secondary device (20) can be connected in a disconnectable fashion to the at least one secondary drive (12) via a clutch (31).

8. Hybrid drive (1) according to one of the preceding claims, wherein the secondary device (20) is designed,
- to start the primary device (10) and/or
- to assist the primary device (10) when the vehicle is accelerated.

9. Hybrid drive (1) according to one of the preceding claims, wherein the at least one secondary drive (12) is embodied fixed to the main drive, in particular fixed to the crankshaft.

10. Hybrid drive (1) according to one of the preceding claims, wherein
- the main drive (11) comprises a crankshaft and/or
- the main drive (11) can be connected to a drive train shaft (13) of the vehicle,
and/or
- the main drive (11) can be connected to the at least one secondary drive (12).

11. Hybrid drive (1) according to one of the preceding claims, wherein
- a secondary load (23) of the vehicle can be connected to the secondary device (20), and/or
- a secondary load (23') of the vehicle can be connected to the at least one secondary drive (12) .

12. Hybrid drive (1) according to one of the preceding claims, wherein the energy which is to be converted comprises at least one form of the following:
- regeneration energy,
- kinetic energy,
- braking energy,
- momentum,
- excess energy.

13. Hybrid drive (1) according to one of the preceding claims, wherein a transmission (40) is connected downstream of the main drive (11).

14. Vehicle, in particular a utility vehicle, comprising a hybrid drive (1) according to one of the preceding claims.

## Revendications

1. Entraînement hybride (1) pour véhicule, en particulier véhicule utilitaire, comprenant :
un dispositif primaire (10) prévu pour une alimentation en énergie primaire et présentant unà d'entraînement principal (11) et au moins un train d'entraînement secondaire (12) présentant un train d'entraînement d'arbre à cames et
un dispositif secondaire (20) prévu pour une alimentation secondaire en énergie et convertissant l'énergie,
le dispositif secondaire (20) pouvant être relié au train d'entraînement ou aux trains d'entraînement secondaires (12) pour délivrer au dispositif secondaire (20) de l'énergie à convertir, par l'intermédiaire du ou des trains d'entraînement secondaires (12) et/ou pour délivrer au train d'entraînement d'entraînement du véhicule de l'énergie convertie par le dispositif secondaire (20), par l'intermédiaire du ou des trains d'entraînement secondaires (12).

2. Entraînement hybride (1) selon la revendication 1, dans lequel le dispositif secondaire (20) peut être relié au train d'entraînement ou aux trains d'entraînement secondaires (12) pour délivrer au dispositif secondaire (20) de l'énergie à convertir prélevée sur le train d'entraînement du véhicule, par l'intermédiaire du train d'entraînement principal (11) et/ou du ou des trains d'entraînement secondaires (12).

3. Entraînement hybride (1) selon les revendications 1 ou 2, dans lequel
le dispositif secondaire (20) comporte une unité hydraulique dotée d'une pompe hydraulique (21) et/ou d'un moteur électrique (21') ou
le dispositif secondaire (20) comporte une unité électrique dotée d'un générateur (25) et/ou d'un moteur électrique (25') et/ou
le dispositif primaire (10) comporte un moteur à combustion interne.

4. Entraînement hybride (1) selon l'une des revendications précédentes, dans lequel le dispositif secondaire (20) :
peut être utilisé hydrauliquement pour convertir en énergie hydraulique de l'énergie à convertir et peut être entraîné par un moteur hydraulique pour délivrer l'énergie convertie à un composant du véhicule et/ou au train d'entraînement d'entraînement du véhicule ou
peut être utilisé comme génératrice pour convertir en énergie électrique de l'énergie à convertir et peut être utilisé en moteur électrique pour délivrer l'énergie convertie à un composant du véhicule et/ou au train d'entraînement d'entraînement du véhicule.

5. Entraînement hybride (1) selon l'une des revendications précédentes, dans lequel le dispositif secondaire (20) comporte au moins un accumulateur d'énergie (22; 26) qui conserve l'énergie convertie.

6. Entraînement hybride (1) selon la revendication 5, dans lequel le ou les accumulateurs d'énergie (22; 26) sont de type mécanique, hydraulique ou électrique.

7. Entraînement hybride (1) selon l'une des revendications précédentes, dans lequel le dispositif secondaire (20) peut être relié de manière séparable au train d'entraînement ou aux trains d'entraînement secondaires (12) par l'intermédiaire d'un embrayage (31) .

8. Entraînement hybride (1) selon l'une des revendications précédentes, dans lequel le dispositif secondaire (20) est configuré
pour démarrer le dispositif primaire (10) et/ou pour assister le dispositif primaire (10) lorsque le véhicule est accéléré.

9. Entraînement hybride (1) selon l'une des revendications précédentes, dans lequel le ou les trains d'entraînement secondaires (12) sont solidaires de l'entraînement principal et en particulier de l'arbre de vilebrequin.

10. Entraînement hybride (1) selon l'une des revendications précédentes, dans lequel
le train d'entraînement principal (11) comporte un arbre de vilebrequin et/ou
le train d'entraînement principal (11) peut être relié à un arbre (13) de train d'entraînement du véhicule et/ou
le train d'entraînement principal (11) peut être relié au train d'entraînement ou aux trains d'entraînement secondaires (12).

11. Entraînement hybride (1) selon l'une des revendications précédentes, dans lequel
un consommateur secondaire (23) du véhicule peut être relié au dispositif secondaire (20) et/ou
un consommateur secondaire (23') du véhicule peut être relié au train d'entraînement ou aux trains d'entraînement secondaires (12).

12. Entraînement hybride (1) selon l'une des revendications précédentes, dans lequel l'énergie à convertir présente au moins l'une des formes suivantes :
énergie de récupération,
énergie cinétique,
énergie de freinage,
énergie de poussée et
énergie en excès.

13. Entraînement hybride (1) selon l'une des revendications précédentes, dans lequel le train d'entraînement principal (11) est suivi d'une transmission (40).

14. Véhicule, en particulier véhicule utilitaire, comprenant un entraînement hybride (1) selon l'une des revendications précédentes.
